# EUROPÄISCHE PATENTSCHRIFT

(11) **EP 2 512 306 B1**
(45) Veröffentlichungstag und Bekanntmachung des Hinweises auf die Patenterteilung: **20.11.2013**
(21) Anmeldenummer: 10796271.4
(22) Anmeldetag: 07.12.2010
(51) Int. Cl.: A47J 31/54

(54) **VORRICHTUNG UND VERFAHREN ZUM HERSTELLEN VON MISCHGETRÄNKEN MITTELS ELEKTROMAGNETISCHER STRAHLUNG**
DEVICE AND METHOD FOR PRODUCING MIXED DRINKS BY MEANS OF ELECTROMAGNETIC RADIATION
DISPOSITIF ET PROCÉDÉ POUR LA PRÉPARATION DE BOISSONS MÉLANGÉES AU MOYEN D'UN RAYONNEMENT ÉLECTROMAGNÉTIQUE

(30) Priorität: 14.12.2009 DE 102009058240
(43) Veröffentlichungstag der Anmeldung: 24.10.2012
(73) Patentinhaber: Meyl, Hendrik, 81243 München (DE)
(72) Erfinder: Meyl, Hendrik, 81243 München (DE)
(86) Internationale Anmeldenummer: PCT/EP2010/007437
(87) Internationale Veröffentlichungsnummer: WO 2011/082753

(56) Entgegenhaltungen:
- WO-A2-2011/003543
- US-A1- 2004 188 428
- US-A1- 2005 211 102

## Beschreibung

Die Erfindung betrifft Brausysteme zur Bereitung einer einzelnen Portion eines Mischgetränks mittels elektromagnetischer Strahlung. Eine einzelne Getränkeportion ist die Menge, die für genau eine Person zum unverzüglichen Konsum zubereitet wird. Die üblicherweise verwendete Wellenlänge der elektromagnetischen Strahlung liegt im Zentimeterbereich (Mikrowellen).

Ein Mischgetränk besteht aus mehreren, üblicherweise auch einzeln konsumierbaren Getränkekomponenten, die in einem Trinkgefäß vereint werden. Diese Vereinigung der Getränkekomponenten besteht aus Mischung oder Schichtung, wobei diese Formen beliebig kombiniert werden können. Beispielsweise sei der Cappuccino genannt, bei dem heiße Milch und Espresso zu gleichen Teilen gemischt sind und eine Schicht Milchschaum dieses Gemisch bedeckt.

Dieses Beispiel zeigt ebenfalls eine Besonderheit von Mischgetränken. Der vielfach Verwendung findende Milchschaum ist kein eigenständiges Getränk, sondern wird ausschließlich in Mischgetränken verwendet. Insofern steht die Herstellung von Milchschaum nicht nur in direktem Zusammenhang mit dem Herstellen von Mischgetränken, sondern ist für viele Mischgetränke eine Voraussetzung.

Die Herstellung von Mischgetränken geschieht auf verschiedenste Art und Weise, wobei diese auch bei gleichen Getränken unterschiedlich sein kann. So wird in einer Espressobar vom Barista bei der Zubereitung eines Cappuccinos meist zuerst der Espresso gebraut, dann die beim Aufschäumen der Milch entstandene heiße Milch und zuletzt-der Milchschaum aus der Aufschäumkanne zugefügt. Hierbeit werden die Getränkekomponenten z. T. in separaten Braubehältern, wie beispielsweise die genannte Aufschäumkanne, zubereitet um danach in einem Behälter zusammengestellt zu werden.

Bei einem Vollautomaten hingegen wird meist zuerst die Milch für eine Portion aufgeschäumt und danach der Espresso hineingebraut. Das Getränk wird dann in einem einzigen Behälter zubereitet. Nachteilig hierbei ist, dass der durch den Milchschaum laufende Espresso diesen verfärbt und an den Durchlaufstellen zum Einstürzen bringt. Wird bei einem Vollautomaten die Zusammenstellung des Mischgetränkes wie beim Barista vorgenommen, sind wiederum mehrere Behälter erforderlich.

Zum Bereiten von Mischgetränken mittels elektromagnetischer Strahlung besteht kein vergleichbares Brausystem oder -verfahren.

Es sei nicht außer Acht zu lassen, dass oftmals das Erhitzen von Getränken oder Brauflüssigkeiten für einfache Getränke durch direktes Erhitzen der Flüssigkeit in einem mikrowellentauglichen Gefäß die einfachste und zweckdienlichste Lösung ist. Für einen Tee, zum Beispiel, wird das Wasser einfach in der zum Konsum verwendeten Tasse erhitzt. Danach wird der Tee zur Extraktion hinzugefügt.

Es gibt allerdings eine Großzahl beliebter Getränke, die in ihrer Zubereitung die Extraktion eines Getränkegrundstoffes mittels Druck erfordern. Insbesondere betrifft dies Kaffeemischgetränke, wobei das Kaffeemehl im Espressoverfahren extrahiert wird, wozu spezielle Vorrichtungen vonnöten sind. Entsprechende Brauverfahren bei Verwendung von elektromagnetischer Strahlung sind Stand der Technik.

Eine Vorrichtung und das dazugehörigen Verfahren zum Herstellen von Getränken mittels elektromagnetischer Strahlung ist in der Patentanmeldung PCT/EP2010/003979 (=WO-A-2011 003543) vorgestellt.

Für die Herstellung von Milchschaum sind ebenfalls verschiedenste Brauverfahren bekannt. Die traditionelle Zubereitung ist das Aufschäumen in einem Aufschäumbehälter mittels heißem Dampf. Weiterhin bekannte Methoden sind automatisierte Aufschäumvorrichtungen mittels Wasserdampf für z. B. Kaffeevollautomaten (DE 10134930; DE 3902281; EP 0195750), die Verwendung einer Aerosol-Aufschäumvorrichtung (US 2004/0076730), oder das mechanische Aufschlagen der Milch.

In seiner Patentanmeldung EP 1060701 zeigt Converti einen Kaffee-Braueinheit, der im Braubehälter entstehenden überschüssigen Dampf in den Auffangbehälter ableitet. Wird dieser nun mit einer zweiten Flüssigkeit, z. B. Milch, befüllt, wird diese durch den Dampf erhitzt und ggf. aufgeschäumt. Da das Aufschäumen von Milch mehr benötigt als das bloße Hineinleiten von Dampf, ist bei diesem Verfahren kein mit einem vom Barista gebrauten Cappuccino vergleichbares Getränk zu erwarten.

Alves präsentiert in seiner Patentanmeldung US 2004/0020922 einen Multikocher, der für die Herstellung eines Extraktionsgetränks oder eines durch einfache Erhitzung einer Flüssigkeit gewonnenes Heißgetränk taugt. Zusätzlich präsentiert Alves in seiner Patentanmeldung US 6973870 einen Milchkocher. Beide Konzepte sorgen für die Erhitzung des Getränkes durch elektromagnetische Strahlung bishin zum Siedepunkt und für die Abschirmung des fertigen Getränks vor weiterem Erhitzen. Die Zubereitung von Mischgetränken aus mehreren, mittels elektromagnetischer Strahlung zubereiteten Getränkekomponenten ist mit diesem Aufbau nicht möglich, da der Auffangbehälter teilweise mit seiner Öffnung nach unten verwendet werden muss.

Die Kombination der Zubereitungsschritte, d. h. dem Brauen des Extraktgetränkes und dem Erhitzen der Milch, zu einem einzelnen Arbeitsschritt des Endkunden sind von Policappelli in der Patentanmeldung US 2004188428 und von Vu et al. in der Patentanmeldung US 2005/0211102 dargestellt. Hierbei sind mehrere Braukammern vorgesehen, in denen die Brauflüssigkeiten gleichzeitig durch Absorption elektromagnetischer Strahlung erhitzt werden. Bei vorbestimmten, durch die Erhitzung enstehenden Bedingungen werden die Brauflüssigkeiten entweder direkt oder durch einen aromatragenden Getränkegrundstoff zu dessen Extraktion in einen Auffangbehälter gepresst.

Das gleichzeitige Erhitzen aller Getränkekomponenten erfordert eine genaue Zusammenstellung der Ausgangsstoffe, soll eine hohe Getränkequalität erreicht werden. Dies bedeutet, dass die Zutaten, die Mischverhältnisse und die Temperatur aufeinander abgestimmt sind. Insofern ist diese Methode hervorragend für Einwegsysteme geeignet, da der Hersteller die Gesamtkomposition feinstens einstellen kann.

Bei Mehrweggeräten, die der Endverbraucher selbst mit den Ausgangsstoffen befüllt, ist die Getränkequalität bei gleichzeitiger Zubereitung der unterschiedlichen Getränkekomponenten abhängig von den Gewohnheiten und dem Geschmack des Verbrauchers. Dabei wird der Bereiter wird mit Ausgangsstoffen verschiedenster Eigenschaften befüllt. Es kann die Zusammensetzung (z. B. Milch mit hohem oder niedrigem Fettgehalt), die Temperatur (beispielsweise gekühlte Milch und Wasser auf Zimmertemperatur) und die Befüllmenge (wobei oftmals der Verbraucher nur grob die Vorgaben einhält) bei jedem Ausgangsstoff und von Bereitung zu Bereitung variieren. Insofern erfordert in diesem Fall jedes Getränk seine individuelle Bereitungsweise und -zeit.

Zur gezielten Herstellung von Milchschaum und somit von vielen Milchmischgetränken mittels elektromagnetischer Strahlung besteht bisher keine zufriedenstellende Lösung.

Zuletzt sei erwähnt, dass die Abschirmung von nicht zu erhitzenden Teilen ein wichtiger Aspekt bei der Verwendung von elektromagnetischer Strahlung zur Erwärmung ist. So darf z. B. der Getränkegrundstoff nicht verbrennen und das fertige Getränk evtl. nicht weiter erhitzt werden und nicht kochen. Bestehende Methoden sind die Verwendung von solidem Metall (US 2601067, US 4386109) oder einer leitenden Beschichtung (US 2601067), um die entsprechenden Bereiche vor elektromagnetischer Strahlung abzuschirmen. Ebenfalls bekannt ist die Eigenschaft von elektromagnetischer Strahlung, sich durch eine bestimmte Größe unterschreitenden Öffnungen in leitenden Schichten nicht fortpflanzen zu können.

Ziel der Erfindung ist eine einfache und flexible Methode zur Herstellung von Mischgetränken.

Insbesondere ist ein Ziel der Erfindung ein Brausystem für möglichst viele unterschiedliche Getränke.

Auch ist ein Ziel der Erfindung, eine einfache, saubere und sichere Handhabung des Brausystems zu gewährleisten.

Ebenfalls ist ein Ziel der Erfindung, alle Oberflächen für eine schnellere und bessere Reinigung möglichst zugänglich zu gestalten.

Schließlich ist ein Ziel der Erfindung, dass das Brausystem kostengünstig, einfach und fehlerunanfällig hergestellt werden kann.

Zusätzlich ist ein Ziel der Erfindung, dass das Brausystem die Herstellung von Mischgetränken mit heißer Milch und Milchschaum ermöglicht.

Die Erfindung findet Anwendung bei der Getränkebereitung mittels elektromagnetischer Strahlung.

Insbesondere findet die Erfindung Verwendung in kleinen, tragbaren Systemen, die ausschließlich einzelne Getränkeportionen zubereiten.

Die Erfindung ist ein Verfahren mit dazugehörigem Brausystem zur Zubereitung eines Mischgetränkes aus zwei oder mehr Getränkekomponenten, wobei das Mischgetränk in einem Auffangbehälter zusammengestellt wird und zumindest zwei Getränkekomponenten mittels elektromagnetischer Strahlung zubereitet werden, wobei die Getränkekomponenten in aufeinander folgenden Schritten zubereitet werden, dabei verschiedene Getränkekomponenten keinesfalls gleichzeitig elekromagnetischer Strahlung ausgesetzt werden, zur Bereitung jeder Getränkekomponente immer derselbe Auffangbehälter zum unmittelbaren Auffangen der Getränkekomponente dient und wobei die bereits zubereiteten Getränkekomponenten während der Zubereitung nachfolgender Getränkekomponenten im Auffangbehälter verbleiben.

Abbildungen 1 bis 17 zeigen verschiedene Ausführungen und Details der Erfindung:
**Abbildung 1** zeigt eine Espresso-Braueinheit nach Stand der Technik, wie er auch zur Herstellung von Mischgetränken verwendet werden kann.
**Abbildung 2** zeigt eine erste Ausführung der erfindungsgemäßen Braueinheit für heiße Milch mit Milchschaum vor der Zubereitung.
**Abbildung 3** zeigt die erste Ausführung der erfindungsgemäßen Braueinheit für heiße Milch mit Milchschaum nach der Zubereitung.
**Abbildung 4** zeigt eine zweite Ausführung der erfindungsgemäßen Braueinheit für heiße Milch mit Milchschaum.
**Abbildung 5** zeigt eine dritte Ausführung der erfindungsgemäßen Braueinheit für heiße Milch mit Milchschaum.
**Abbildung 6** zeigt den Verschlus aus Abbildung 5 von oben.
**Abbildung 7** zeigt eine erste erfindungsgemäße Gestaltung von Düsen oder Filterlöchern.
**Abbildung 8** zeigt einen Querschnitt der Düsen oder Filterlöchern aus Abbildung 7.
**Abbildung 9** zeigt eine Explosionsdarstellung der Filtereinsätze der Abbildung 8.
**Abbildung 10** bis **15** zeigen eine zweite erfindungsgemäße Gestaltung von Düsen oder Filterlöchern in verschiedenen Schnittansichten.
**Abbildung 16** zeigt eine vierte Ausführung der erfindungsgemäßen Braueinheit für heiße Milch mit Milchschaum.
**Abbildung 17** zeigt den Verschluss der vierten Ausführung der erfindungsgemäßen Braueinheit für heiße Milch mit Milchschaum.

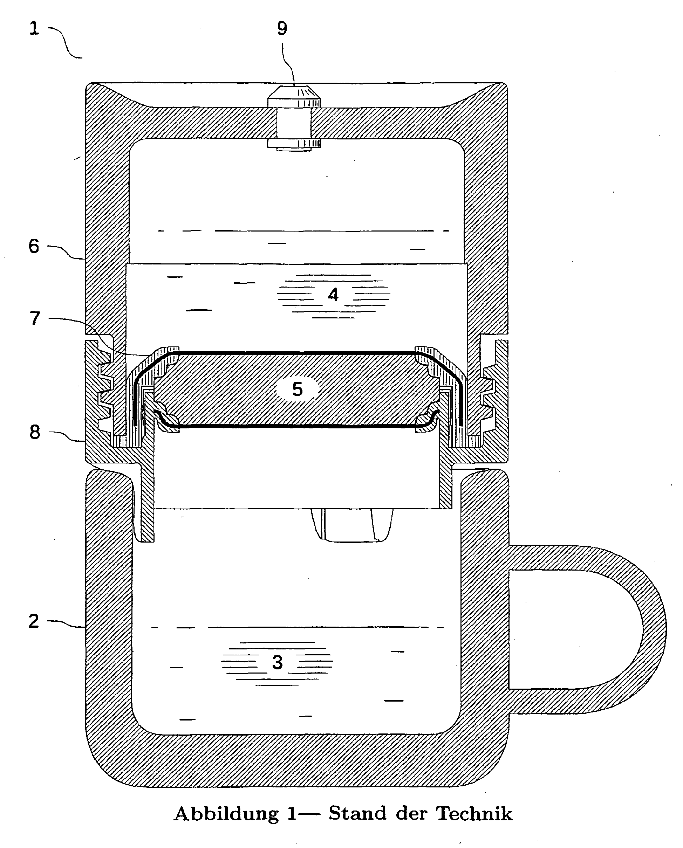

Abbildung 1 zeigt eine Ausführung der Patentanmeldung PCT/EP2010/003979 zur Herstellung von Getränken mittels elektromagnetischer Strahlung. Mit ihr lassen sich aromatragende Getränkegrundstoffe unter Druck extrahieren. Sie ist somit unerlässlich für die Herstellung von Mischgetränken mit Espresso.

Eine Braueinheit (1), bestehend aus durchsichtigem Braubehälter (6), Filtereinsatz (7) und Filterverschluss (8), wird mit der Brauflüssigkeit (4) und Getränkegrundstoff (5) befüllt und auf einen Auffangbehälter (2) gesetzt. Beim Einwirken geeigneter energiereicher elektromagnetischer Strahlung auf die gebrauchsfertig befüllte Braueinheit (1) wird der Inhalt des Braubehälters (6) erhitzt und es entsteht ein Überdruck, der die heiße Brauflüssigkeit (4) durch den Getränkegrundstoff (5) presst. Das Extrakt tropft unmittelbar in den Auffangbehälter (2), wo das fertige Getränk (3) gesammelt wird. Für die Sicherheit der Braueinheit (1) ist eine Sicherheitsvorrichtung (9) zuständig, die dafür sorgt, dass der zulässige Innendruck des Braubehälters (6) nicht überschritten wird.

Der Auffangbehälter (2) besitzt eine Vorrichtung, die die weitere Erwärmung seines Inhaltes vehindert oder vermindert. Solche Vorrichtungen sind Stand der Technik und werden hier nicht weiter ausgeführt.

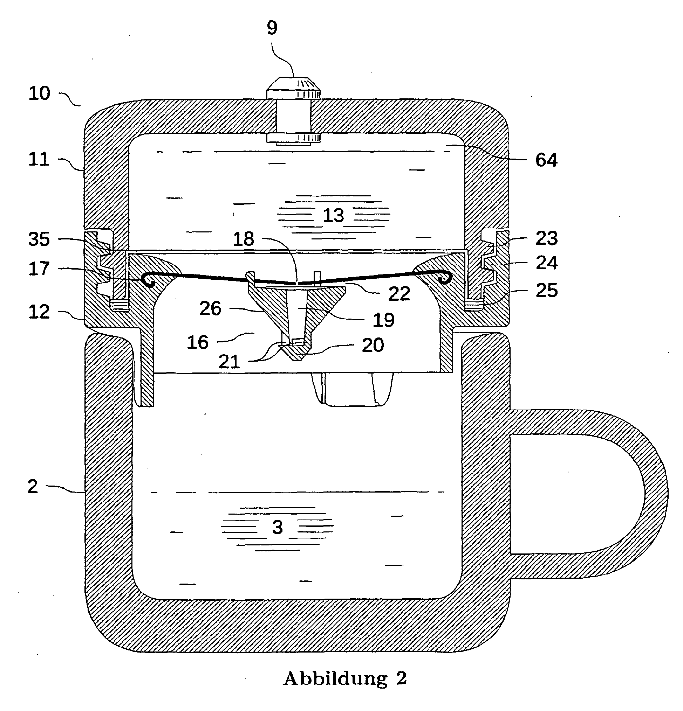

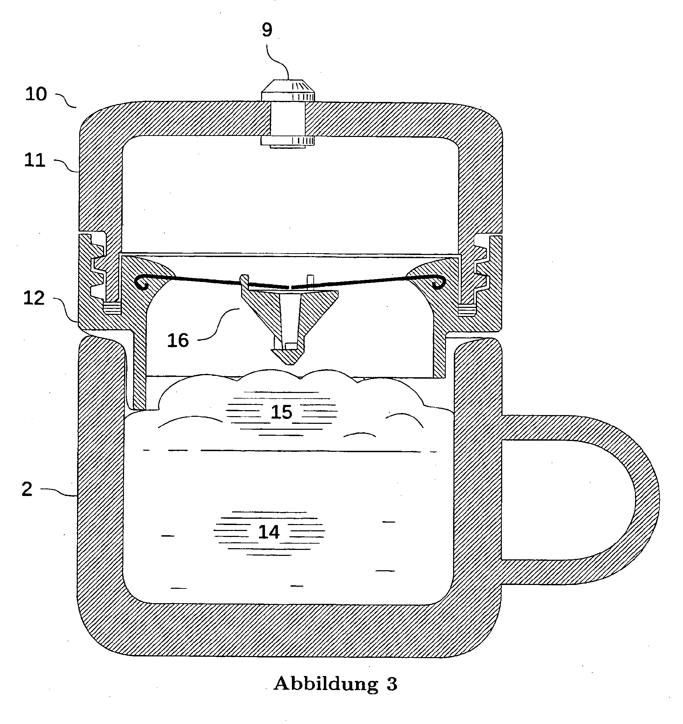

Abbildung 2 zeigt eine erste Ausführung einer Braueinheit (10) für heiße Milch mit Milchschaum (10) vor der Zubereitung. Abbildung 3 zeigt sie nach der Zubereitung von heißer Milch mit Milchschaum.

Die Braueinheit (10) für heiße Milch mit Milchschaum besteht aus einem durchsichtigen Braubehälter (11) und einem Verschluss (12). Der Braubehälter (11) hat eine Füllkennlinie (35) und eine Verschlussvorrichtung (23) die mit der Verschlussvorrichtung (24) des Verschlusses (12) zusammenarbeitet. Die hier dargestellten Verschlussvorrichtungen (23, 24) sind Gewinde.

Braubehälter (11) und Verschluss (12) bilden einen druckdichten Behälter (64), wobei bei Bedarf eine dichtende Vorrichtung (25), beispielsweise eine Flachdichtung aus Gummi, eingesetzt wird, um die Verschlussstellen abzudichten. Die Braueinheit (10) für heiße Milch mit Milchschaum besitzt eine Sicherheitsvorrichtung (9).

Der Verschluss (12) enthält eine Abschirmung (17), die die Einstrahlung von elektromagnetischer Energie in die Öffnung des Auffangbehälters (2) verhindert, zumindest vermindert. Am Verschluss (12) ist eine aufschäumende Vorrichtung (16) angebracht, die die Milch (13) derart mit Luft vermischt, dass Milchschaum (15) entsteht. Die aufschäumende Vorrichtung (16) hat eine oder mehrere Düsen (18), durch die die im Braubehälter (11) unter Druck stehende Milch (13) in eine Mischvorrichtung in Form einer Mischkammer (19) gepresst wird.

Der Körper (26) der aufschäumenden Vorrichtung (16) enthält mittig die Mischkammer (19) und besitzt Öffnungen (22), die der Luftzufur dienen. Der Strahlstopper (20) verhindert, dass das aus der Mischkammer (19) tretende Gemisch aus heißer Milch und Milchschaum mit hoher Geschwindigkeit in den Espresso (3) schießt, da dies zur Zerstörung oder zumindest Verfärbung des Schaumes (15) führen würde. Er ist über Haltestege (21) mit dem Körper (26) verbunden.

Das neuartige Verfahren zur Herstellung von Mischgetränken mittels elektromagnetischer Strahlung lässt sich vorbildlich an der erfindungsgemäßen Bereitung eines Cappuccino, d. h. einem Gemisch (14) aus Espresso und heißer Milch mit darüber einer Schicht Milchschaum (15) beschreiben.

Mit einer Espresso-Braueinheit (1) wird in einem zum direkten Konsum geeigneten Auffangbehälter (2) ein Espresso (3) gebraut. Hierfür wird der Bereiter (1) in seine Komponenten Braubehälter (6), Filtereinsatz (7) und Filterverschluss (8) zerlegt, mit einer Brauflüssigkeit (4) (meist Wasser) und einem Getränkegrundstoff (5) (für Espresso entsprechendes Kaffeemehl) befüllt und wieder zusammengesetzt. Die so vorbereitete Braueinheit (1) wird auf einen Auffangbehälter (2), hier eine Tasse, gestellt, mittels eines Mikrowellenofens der Espresso (3) gebraut, und der fertige Espresso (3) unmittelbar im Auffangbehälter (2) aufgefangen.

Während die Zubereitung des Espressos (3) noch läuft, kann die Braueinheit (10) für heiße Milch mit Milchschaum bereits vorbereitet werden. Als Vorbild wird die Braueinheit (10) für heiße Milch mit Milchschaum aus Abbildung 2 betrachtet. Verschluss (12) wird vom Braubehälter (11) abgenommen, letzterer bis zur Kennlinie (35) mit der Milch (13) befüllt, und der Verschluss (12) wieder aufgesetzt.

Nach der Bereitung des Espressos (3) wird die Espresso-Braueinheit (1) von dem Auffangbehälter (2) entfernt und durch die Braueinheit (10) für heiße Milch mit Milchschaum ersetzt. Die Bereitung des Mischgetränkes im Mikrowellenofen wird mit der Braueinheit (10) für heiße Milch mit Milchschaum fortgesetzt. Sobald die Milch den Braubehälter (11) vollständig verlassen hat, ist der Cappuccino fertig. Die Braubehälter (6, 11) sind beide durchsichtig. S lässt sich der Stand des jeweiligen Brauvorgangs jederzeit von außen beobachten und auch leicht das Ende des Brauvorgangs feststellen.

Die konkrete Reihenfolge der Zubereitung der Getränkekomponenten des Mischgetränks ist im Rahmen der Erfindung unwesentlich. Wie schon oben beschrieben, gibt es verschiedene Weisen, ein und das selbe Getränk herzustellen, die allesamt mit der Erfindung zu verwirklichen sind.

Die einzelnen Braueinheiten sind beliebig kombinierbar. So wird eine besonders große Vielfalt an Getränkemöglichkeiten erzielt. Es ist durchaus möglich, eine Braueinheit mehrmals zu gebrauchen, z. B. um einen doppelten Espresso aus zwei einzelnen Espresso mit einer Braueinheit zu erstellen. Ebenso können ein einziges Mal Milch mit Milchschaum auf zweimal Espresso gebraut werden, um ein stärkeres Kaffeemischgetränk zu erhalten.

Da verschiedene Getränke verschiedene Volumen haben, sind Auffangbehälter oftmals verschiedenen Volumens. Der Fachmann wird insofern Sorge tragen, dass alle Möglichkeiten der Erfindung ausgeschöpft werden können, sodass z. B. durch den Einsatz von Adapterstücken auch eine schmale Espressobraueinheit auf eine breite Cappuccinotasse passt. Dabei können die Adapterstücke eigene abnehmbare Vorrichtungen, aber auch fest mit einer der Braueinheiten verbunden sein. Beispielsweise ist eine Espresso-Braueinheit an ihrem Verschluss mit einem permanent verbundenen Adapter für verschiedene Tassengrößen und -formen ausgebildet. Die Adapterstücke können elektromagnetische Strahlen reflektierende Vorrichtungen enthalten.

Nicht alle Getränkekomponenten müssen mit elektromagnetischer Strahlung bereitet werden. Eine Getränkevariante ist z. B. besonders interessant für diejenigen, die es eilig haben: In den Auffangbehälter wird kalte Milch gefüllt und der Espresso hineingebraut. Somit ist das Getränk nach dem Brauen des Espressos direkt konsumierbar. Hier fehlt nun natürlich der für Espresso- und Milchmischgetränke übliche und begehrte Milchschaum.

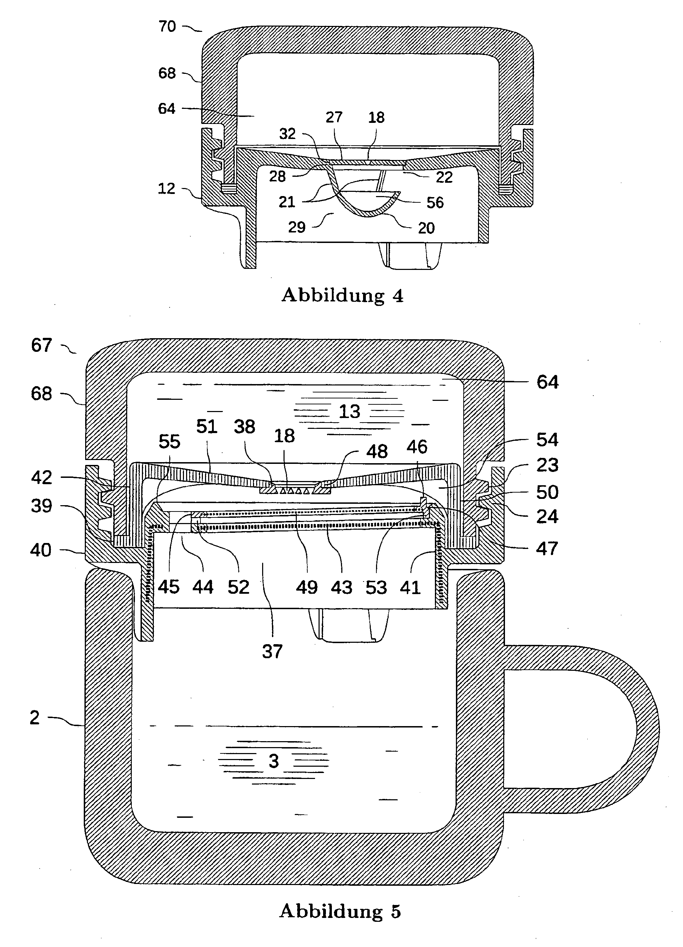

Abbildung 4 zeigt eine zweite Ausführung de erfindungsgemäßen Braueinheit (70) für heiße Milch mit Milchschaum mit einer zweiten aufschäumenden Vorrichtung (29). Der Strahlstopper (20) ist über Haltestege (21), die gleichzeitig die Luftzufuhr (22) definieren, direkt am Verschluss (12) befestigt. Oberhalb des Strahlstoppers (20) ist im Verschluss (12) ein Loch (32) mit einer Haltevorrichtung (28) in Form eines Absatzes ausgestaltet, die eine flexible Scheibe (27) hält. Diese Scheibe (27) ist aus einem Elastomer geformt und enthält eine oder mehrere Düsen (18). Sie steckt derart in der Haltevorrichtung (28), dass sie bei normaler Funktion und normalem Gebrauch die Position hält.

Der Strahlstopper (20) ist kuhlen- oder topfförmig ausgebildet und umschließt die Mischkammer (56). In ihr sammelt sich das Gemisch aus Milch und Milchschaum und läuft in den Auffangbehälter (2), sobald genug Milch (13) aus dem Braubehälter (68) entflossen ist. Die mitgerissene Luft wird vom Gemisch aus Milch und Milchschaum vollständig eingeschlossen, kann so nicht nach außen entweichen und wird intensiv in die Milch hinein verquirlt.

Diese Aufschäumvorrichtung (29) enthält alle sicherheitstechnischen Funktionen, sodass weitere Sicherheitsvorrichtungen überflüssig sind. Die Sicherheit wird durch zweierlei Mechanismen gewährleistet:
Zum Ersten werden durch die Verwendung von elastischem Material bei einem Druckanstieg innerhalb des Braubehälters (68) die Düsen (18) geweitet, sodass der Fluss durch die Düsen (18) sich erhöht. Dieser Effekt kann auch vor Erreichen des Sicherheitsdruckes gezielt eingesetzt werden, z. B. dadurch, dass vor Erreichen des Arbeitsdruckes kein wesentlicher Fluss durch die Düsen (18) vorhanden ist.

Zum Zweiten wird die Scheibe (27) bei übermäßigem Druck aus Halterung (28) herausgedrückt und gibt somit einen Weg mit großem Querschnitt zum Entweichen des Braubehälterinhaltes (13) frei. Dies ist insbesondere im Zusammenhang mit der Verwendung von Milch zu sehen, die bei besonders hohen Temperaturen, wie sie unter Druck entstehen können, gerinnt. Durch die Gerinnung der Milch können bei Sicherheitsmechanismen mit geringem Querschnitt die Flusswege leicht verstopfen und dadurch ihren Zweck verfehlen. Es ist möglich, die Halterung (28) so zu gestalten, dass an einer vordefinierten Stelle die Scheibe (27) als erstes durchgedrückt wird.

Es ist Stand der Technik, dass der Innenraum des Auffangbehälters (2) in Relation zur Umgebung drucklos ist, und an der Verbindungstelle von Braueinheit (1, 10, 67, 70) und Auffangbehälter (2) ein Druckausgleich zur Umgebung ermöglicht wird.

Den Auslass für die Sicherheitsvorrichtung so zu gestalten, dass sich der Braubehälterinhalt (13) zum Auffangbehälter (2) ergießt, hat besondere Vorteile. Im Vordergrund steht hierbei die Sicherheit des Anwenders, da so die Braueinheit (67, 70) keinesfalls heiße Flüssigkeiten oder Gase dorthin schleudert, wo diese in direkten Kontakt zum Anwender treten können. Hinzu kommt, dass nicht die Umgebung verschmutzt wird, sondern alle Flüssigkeiten in der Braueinheit (67, 70) oder dem Auffangbehälter (2) verbleiben. Weiterhin lässt sich so die Sicherheitsfunktion mit der Aufschäumfunktion verbinden, wodurch die Braueinheit (67, 70) für heiße Milch mit Milchschaum (67, 70) einfach und günstig herzustellen ist.

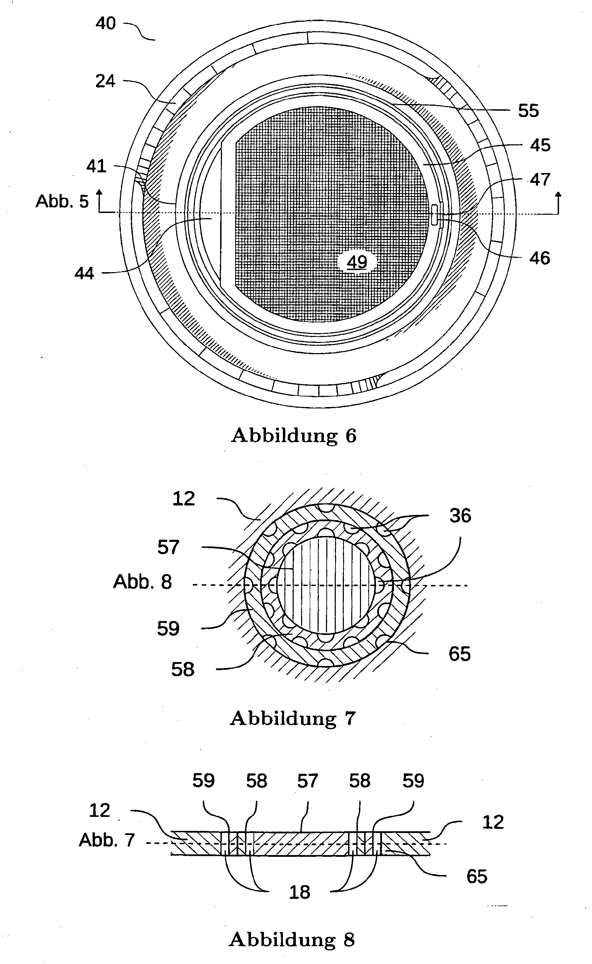

Die in Abbildung 5 gezeigte Ausführung der Erfindung stellt eine Braueinheit (67) für heiße Milch mit Milchschaum mit Aufschäumvorrichtung (37) dar. Der Braubehälter (68) wird hier von einem Mischeinsatz (42) und einem Verschluss (40) über Gewinde (23, 24) verschlossen und bildet somit die Druckkammer (64). Die Abbildung 6 zeigt den Verschluss(40) von oben.

Der Mischeinsatz (42) besteht aus einer trichterförmigen Scheibe (51) mit einem Loch (48) in der Mitte. Hierin steckt ein Düsen- und Sicherheitseinsatz (38), der mit einer oder mehreren Düsen (18) versehen ist. Die trichterförmige Scheibe (51) wird durch den Rand (50) in definiertem Abstand zum Verschluss (40) gehalten. Auf der der Scheibe (51) gegenüberliegenden Seite des Randes (50) ist ein ringförmiger Flansch (39) angebracht, der zwischen dem Braubehälter (68) und Verschluss (40) eingeklemmt ist. Zur besseren Stabilität des Einsatzes können lamellenartige Querversteifungen (54) zwischen Scheibe (51) und Rand (50) angebracht werden.

Am Flansch (39) sind alle dichtenden Vorrichtungen angebracht, z. B. durch angefügte O-Ringe oder Flachdichtungen. Vorzugsweise werden Teile oder der gesamte Einsatz (42) aus elastischem Material hergestellt, wobei der gesamte Flansch (39) als Flachdichtung zwischen Braubehälter (68) und Verschluss (40) wirkt.

Der Düsen- und Sicherheitseinsatz (38) ist durch mechanische Reibung und/oder kleine Hinterschnitte im Loch (48) des Düsen- und Sicherheitseinsatzes (38) befestigt. Hierdurch wird die Sicherheit der Braueinheit (67) für heiße Milch mit Milchschaum gewährleistet, da der Düsen- und Sicherheitseinsatz (38) bei vordefinierter übermäßiger Druckbildung im Braubehälter (68) einen Weg großen Querschnitts öffnet. Die Verwendung anderer Verbindungsarten ist durchaus möglich, solange dem genannten Sicherheitsaspekt genüge getan wird.

Düsen und Sicherheitseinsatz müssen nicht unbedingt kombiniert sein. Es kann der Einsatz auch alleinig als Sicherheitsvorrichtung dienen und die Düsen untrennbar in den Mischeinsatz (42) eingearbeitet sein.

Der Verschluss (40) besteht aus einem im Wesentlichen runden Rahmen (41), der ein Sieb (43) trägt. Das Sieb (43) ist so eingesetzt, dass es zu einer Seite hin abfällt. An der niedrigsten Stelle ist ein Loch (44) in Sieb (43) und Rahmen (41) ausgelassen, welches zum Austausch von Luft und Flüssigkeiten dient. Ringfortsatz (55) am Rahmen (41) sorgt für den sauberen Ausfluss von Flüssigkeit aus dem Zwischenraum zwischen Mischeinsatz (42) und Verschluss (40).

Das Sieb (43) ist vorzugsweise aus Metall gefertigt. Hierdurch wird der frisch entstandene Milchschaum (15) sowie der Inhalt des Auffangbehälters (2), z. B. Espresso (3), nicht weiter erhitzt. Es ist der abschirmenden Wirkung zweckdienlich, dass das Sieb (43) topfförmig im Verschluss (40) weitergeführt wird. Zusammen mit der Abschirmung im Auffangbehälter (2) wird die Energieeinstahlung in den Auffangbehälterinnenraum möglichst weit reduziert.

In dem Rahmen (41) ist ein zweiter, herausnehmbarer Rahmen (45) eingesetzt, der ein zweites, nichtmetallisches Sieb (49) umspannt und dies durch Abstandshalter (53) in vordefiniertem Abstand zum ersten Sieb (43) hält. Dieser Rahmen (45) lässt ebenfalls das Loch (44) frei, ebenso wie einen Spalt (52). Der am Rahmen (45) befestigte Griff (46) ermöglicht das Herausnehmen des Rahmens zur Säuberung. Eine Einrastvorrichtung (47), die als Nase gestaltet ist, und den Rahmen (45) in Verschluss (40) arretiert, ist vorzugsweise direkt neben dem Griff (46) angeordnet.

Die doppelten Siebe (43, 49) sorgen für eine gute Durchmischung der Milch mit Luft und somit für einen feinen Milchschaum. Eine gründliche Reinigung der Braueinheit (67) ist aufgrund des einfachen Aufbaus möglich. Durch das herausnehmbare Sieb (49) kann der Anwenden zwischen der Verwendung von einem oder zwei Sieben wählen und somit die Schaummenge nach Bedarf einstellen.

Weiterhin ermöglicht die Verwendung eines herausnehmbaren Einsatzes (38) zur Aufnahme der Düsen (18), für verschiedene Verwendungen verschiedene Düsen- und Sicherheitseinsätze (38) bereitzustellen, wodurch die Anwendungsmöglichkeiten des Brausystems vervielfältigt werden.

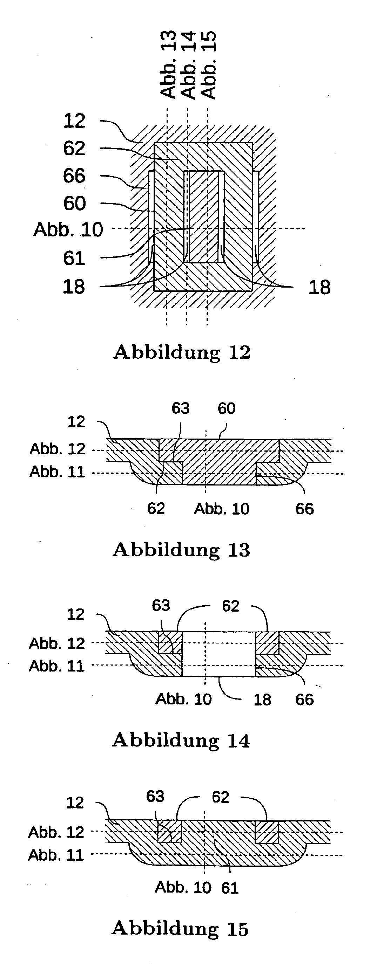

In Brausstemen werden meiste feine Löcher verwendet, die z. B. als feine Düsen (18) oder Filterlöcher verwendet werden, deren erfindungsgemäße Gestaltung in Abbildungen 7 bis 15 dargestellt ist.

Anstelle die feinen Düsen (18) oder feinen Löcher durch filigrane Werkzeugteile herzustellen, werden in der vorliegenden Erfindung ein oder mehrere Einsätze (57, 58, 59, 60) gefertigt, die in ein größeres Loch (65, 66) eingesetzt werden. Die Einsätze (57, 58, 59, 60) sind stellenweise etwas kleiner als das Loch (65, 66), sodass sich zwischen den Einsätzen (57, 58, 59, 60) und dem Loch (65, 66) Hohlräume bilden.

Die Hohlräume zwischen den Einsätzen (57, 58, 59, 60) und dem Loch ( 65, 66) können im Querschnitt verschiedenste Formen annehmen. Sie können sich beispielsweise in eine Richtung verjüngen und somit auf der einen Seite eine kleine und auf der anderen Seite eine große Öffnung des Hohlraumes bilden.

Die Formen zum Herstellen der Einsätze (31, 57, 58, 59, 60) sowie des Loches (32, 65, 66) sind aufgrund dieser Bauweise robust und somit langlebig.

Ebenso können die Einsätze (57, 58, 59, 60) als Sicherheitsvorrichtung funktionieren, wenn sie derart befestigt sind, dass sie sich bei einem bestimmen Überdruck lösen und das gesamte Loch (65, 66) freigeben, um dem Braubehälterinhalt Ableitung zu schaffen. Dies ist beispielsweise durch einmaliges Brechen der Befestigung möglich, wenn z. B. die Einsätze (57, 58, 59, 60) permanent eingesetzt sind. Die Braueinheit ist danach unbrauchbar. Vorteilhafter ist es, wenn der gesamte Einsatz (57, 58, 59, 60) als Steckverbindung ausgebildet ist und bei übermäßigem Druck aus dem Loch (65, 66) hrausrutscht. Der Gebraucher kann durch das erneute Einstecken des Einsatzes (57, 58, 59, 60) in das Loch (65, 66) die Braueinheit wieder in einen betriebsfähigen Zustand versetzen.

Ein Anwendungsbeispiel der erfindungsgemäßen Düsen oder Filterlöcher ist in den Abbildungen 7 bis 9 gezeigt. Hierbei wird das Loch (65) mit insgesamt drei Einsätzen (57, 58, 59) versehen.

Der äußere Einsatz (59) ist auf seiner äußeren Seite mit Rillen (36) versehen und wird direkt im Loch (65) eingesetzt. Im äußeren Einsatz (59) befindet sich der mittlere Einsatz (58), der sowohl auf seiner inneren als aus seiner äußeren Seite Rillen (36) hat. Der innere Einsatz (57) ist im mittleren Einsatz (58) platziert und enthält keine Rillen.

Die Rillen(36) könne in beliebiger Art ausgebildet sein und an beliebegen Stellen der Einsätze (57, 58, 59) angeordnet sein.

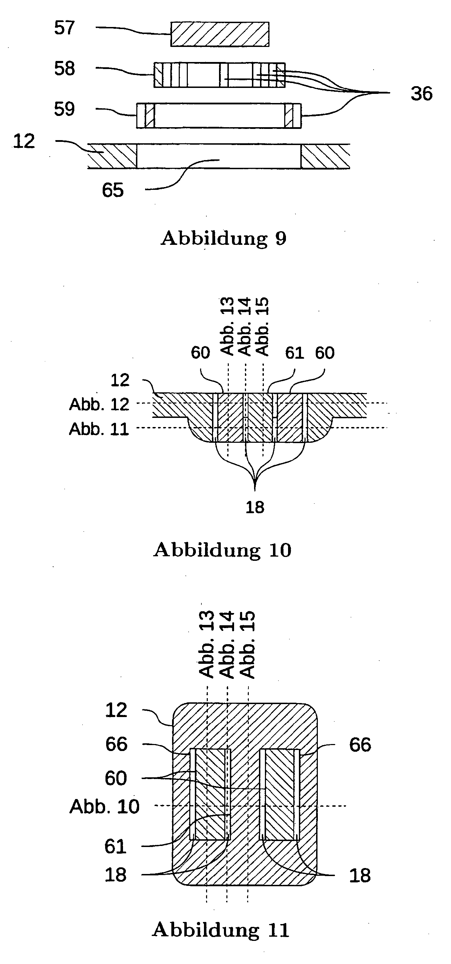

Ein weiteres Anwendungsbeispiel der erfindungsgemäßen Düsen oder Filterlöcher ist in Abbildung 10 bis 15 gezeigt.

Hierbei handelt es sich um zwei rechteckige Löcher (66), zwischen denen sich ein Mittelsteg (61) befindet und in denen der Düseneinsatz (60) eingesetzt ist. Der Düseneinsatz (60) besteht aus zwei parallelen Platten, die über einen Verbindungs- und Haltesteg (62) verbunden sind. Der Verbindungs- und Haltesteg (62) greift in eine entsprechende Nut (63), die über- und unterhalb der Löcher (66) eingelassen ist.

Die so geformten Düsen (18) oder Filterlöcher sind längliche Spalten. Ebenso können die Spalten einem bestimmten Profil folgen, z. B. einer Schlangenlinie oder einem Zickzack.

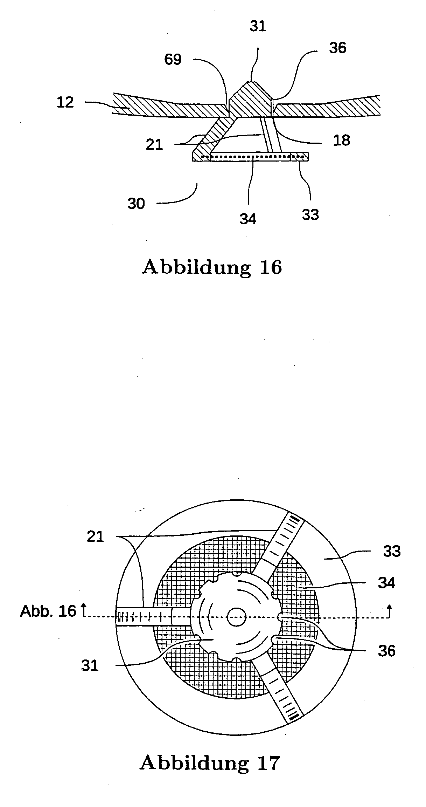

Abbildung 16 zeigt eine dritte Ausführung des Braueinheit (70) für heiße Milch mit Milchschaum. Sie zeigt Aufschäumvorrichtung (30), die aus einem Einsatz (31) besteht, der ein Loch (69) im Verschluss (12) schließt. Der Einsatz (31) enthält entlang der Seite eine oder mehrere Rillen (36), die zusammen mit dem Rand des Loches (32) die Düsen (18) formen. An dem Einsatz (31) ist über die Haltestege (21) ein Ring (33) befestigt, der ein feinmaschiges Sieb (34) hält.

Der Einsatz (31) übernimmt die Funktion einer Sicherheitsvorrichtung. Steigt der Druck im Braubehälter (68) zu hoch, löst er sich aus dem Loch (32) im Verschluss (12) und gibt so den Weg zur schnellen Entleerung des Braubehälters (68) frei.

Der Fachmann erkennt somit, dass die Einsätze (31, 57, 58, 59, 60) permanent befestigt werden können, herausnehmbar sein können oder sich nur unter ganz bestimmten Bedingungen aus dem Loch (32, 65, 66) lösen, wie beispielsweise bei der Funktion als Sicherheitsvorrichtung.

Natürlicherweise ist es für den Fachmann ein leichtes, verschiedenste Einsatzformen zu verwenden. Diese können nebst der hier vorgestellten Formen beispielsweise auch oval, dreieckig, sechseckig, stab-, kreuz- oder sternförmig ausfallen. Ein Gleiches gilt für die Form und Anordnung der Düsen (18) und Filterlöcher.

Außerdem ist es dem Fachmann ein Leichtes, die in den Abbildungen 7 bis 17 offenbarten Gestaltungen von Düsen (18) und Filterlöcher auch in den in Abbildungen1 bis 6 offenbarten Braueinheiten (1, 10, 67, 70) anzuwenden.

Soweit nicht anders angegeben, sind für die vorgestellten Ausführungen der Erfindung alle Werkstoffe mikrowellentauglich. Dies bedeutet, dass sie die elektromagnetische Strahlung der üblicherweise verwendeten 2,45 GHz nicht oder nur unwesentlich absorbieren oder reflektieren. Des Weiteren sind die möglichen Werkstoffe nicht eingeschränkt und können vom Fachmann je nach weiteren Anforderungen beispielsweise aus den Bereichen der Keramik, Gläser oder Kunststoffe gewählt werden.

Dem versierten Fachmann wird es ebenfalls ein leichtes sein, gezielte Vorrichtungen teilweise oder voll aus einem Metall zu fertigen, ohne die beschriebenen Funktionalitäten zu beeinträchtigen. Ebenso weiß er die durch die Verwendung von Metall auftretenden Sicherheitsrisiken zu vermeiden.

Auf Basis der vorgestellten Aufschäumvorrichtungen können weitere Ausführungen der Braueinheit (10, 67 ,70) für heiße Milch mit Milchschaums ausgestaltet werden, welches für den Fachman ein Leichtes ist, jedoch nicht vom Geiste der Erfindung abweicht. So sind für die Mischvorrichtung in der vorliegenden Beschreibung als Beispiele eine Mischkammer oder ein oder mehrere Mischsiebe ausgeführt. Die Mischvorrichtung kann aber auch anders ausgestaltet sein.

Aufgrund der besseren Verständlichkeit sind in dieser Patentanmeldung die gezeigten Vorrichtungen möglichst rotationssymmetrisch gehalten, sie können allerdings auch arbiträre Formen annehmen. Ebenso können die Durchmesser verschiedener Behälter, beispielsweise Auffangbehälter und Braubehälter, erheblich voneinander abweichen. Die dadurch erforderlichen konstruktiven Abweichungen von den vorgestellten. Ausführungen der Erfindung sind dem Fachmann ein leichtes.

Es ist selbstverständlich, dass sich mit der in dieser Beschreibung vorgeschlagenen Braueinheit für heiße Milch mit Milchschaum auch andere Flüssigkeiten aufschäumen lassen. Dieses wird der Fachmann aufgrund der hier vorgestellten Erfindung ohne Weiteres umsetzen können.

## Patentansprüche

1. Verfahren zur Zubereitung eines Mischgetränkes aus zwei oder mehr Getränkekomponenten, wobei das Mischgetränk in einem Auffangbehälter (2) zusammengestellt wird und zumindest zwei Getränkekomponenten mittels elektromagnetischer Strahlung zubereitet werden, **dadurch gekennzeichnet, dass** die Getränkekomponenten in aufeinander folgenden Schritten zubereitet werden, dabei die Braueinheiten (1, 10, 67, 70) für die Getränkekomponenten keinesfalls gleichzeitig elekromagnetischer Strahlung ausgesetzt werden, zur Bereitung jeder Getränkekomponente immer derselbe Auffangbehälter (2) zum unmittelbaren Auffangen der Getränkekomponente dient und wobei die bereits zubereiteten Getränkekomponenten während der Zubereitung nachfolgender Getränkekomponenten im Auffangbehälter (2) verbleiben.

2. Verfahren nach Anspruch 1 zur Zubereitung eines Mischgetränkes aus Kaffee oder Espresso (3) und heißer Milch mit Milchschaum (15), **dadurch gekennzeichnet, dass** zuerst in einem Auffangbehälter (2) der Kaffee oder Espresso (3) mittels elektromagnetischer Strahlung zubereitet wird, und danach dieser nun Kaffee oder Espresso (3) enthaltende Auffangbehälter (2) bei einer vom Espresso-Brauverfahren vollständig unabhängigen Bereitung von heißer Milch mit Milchschaum mittels elektromagnetischer Strahlung als Auffangbehälter (2) dient.

3. Verfahren nach Anspruch 1 oder 2 wobei zur Bereitung von heißer Milch mit Milchschaum als Getränkekomponente die Milch in einem Braubehälter (11, 68) mittels elektromagnetischer Strahlung erwärmt wird und durch eine oder mehrere Düsen (18) gepresst wird, **dadurch gekennzeichnet, dass** die die Milchstrahlen umgebende Luft mitgerissen wird, Milch und Luft sich in einer Mischvorrichtung (19, 34, 43, 49, 56) vermischen und heiße Milch und Milchschaum in den Auffangbehälter (2) fließen.

4. Verfahren nach einem der Ansprüche 2 oder 3, **dadurch gekennzeichnet, dass** anstelle Milch (13) eine andere Flüssigkeit, Emulsion oder Suspension verwendet wird.

5. Brausystem zur Zubereitung eines Mischgetränkes aus zwei oder mehr Getränkekomponenten, wobei das Mischgetränk in einem Auffangbehälter (2) zusammengestellt wird, und zumindest zwei Getränkekomponenten mittels elektromagnetischer Strahlung zubereitet werden, **dadurch gekennzeichnet, dass** das Brausystem besteht aus
a) einem einzigen Auffangbehälter (2) zum unmittelbaren Auffangen der Getränkekomponenten, und
b) mindestens zwei unabhängigen Braueinheiten (1, 10, 67, 70), aus denen die jeweilige Getränkekomponentente während des Brauprozesses herausfließt, wobei die Braueinheiten (1, 10, 67, 70) ersetzbar angeordnet und nicht gleichzeitig auf den Auffangbehälter (2) aufsetzbar sind.

6. Brausystem nach Anspruch 5 zur Zubereitung eines Mischgetränkes aus Kaffee oder Espresso (3) und heißer Milch mit Milchschaum (15), **dadurch gekennzeichnet, dass** es aus einer eigenständigen Braueinheit (1) für Kaffee- oder Espresso, einer eigenständigen Braueinheit (10, 67, 70) für heiße Milch- und Milchschaum und einem einzigen Auffangbehälter (2) besteht.

7. Brausystem nach Anspruch 5 oder 6 mit einer oder mehreren Düsen (18) in mindestens einer der Braueinheiten (10, 67, 70), **dadurch gekennzeichnet, dass** nach den Düsen (18) eine Mischvorrichtung (19, 34, 43, 49, 56) angebracht ist.

8. Brausystem nach einem der Ansprüche 5 bis 7 **dadurch gekennzeichnet, dass** in mindestens einer der Braueinheiten feine Löcher oder feine Spalten enthalten sind, die gebildet werden durch Hohlräume zwischen einem oder mehreren Löchern (65, 66, 69), die größer als die feinen Löcher oder Spalten sind, und einem oder mehreren Einsätzen (31, 57, 58, 59, 60), die in die größeren Löcher (65, 66, 69) eingefügt werden.

9. Brausystem nach einem der Ansprüche 5 bis 8, **dadurch gekennzeichnet, dass** eine Sicherheitsvorrichtung enthalten ist, die aus einem Loch (32, 48, 66, 69) mit einem darin angeordneten Sicherheitsverschluss (27, 31, 38, 57, 58, 59) besteht, wobei das Loch (32, 48, 66, 69) den in der Braueinheit (1, 10, 67, 70) vorgesehenen druckdichten Behälter (64) mit dem Auffangbehälter (2) verbindet, und wobei der Sicherheitsverschluss (27, 31, 38, 57, 58, 59) derart im Loch (32, 48, 66, 69) angebracht ist, dass er sich im Falle eines zu hohen Überdruckes löst und das Loch (32, 48, 66, 69) freigibt.

## Claims

1. A method for preparing a mixed drink from two or more drink components, wherein the mixed drink is made in a collecting container (2) and at least two drink components are prepared by means of electromagnetic radiation, **characterized in that** the drink components are prepared in successive steps, while the brewing units (1, 10, 67, 70) for the drink components are on no account simultaneously exposed to electromagnetic radiation in order to prepare each drink component, the same collecting container (2) is always used for direct collection of the drink components, and wherein the drink components already prepared remain in the collecting container (2) during preparation of the subsequent drink components.

2. The method according to claim 1 for preparing a mixed drink from coffee or espresso (3) and hot milk with milk foam (15), **characterized in that** the coffee or espresso (3) is prepared at first in a collecting container (2) by means of electromagnetic radiation, and the collecting container (2) containing coffee or espresso (3) is used afterwards as a collecting container (2) in order to prepare hot milk and milk foam by means of electromagnetic radiation, completely independent from an espresso brewing method.

3. The method according to claim 1 or 2, wherein the milk as a drink component is heated in a brewing container (11, 68) for preparing hot milk with milk foam by means of electromagnetic radiation, and wherein the milk is pressed through one or more nozzles (18), **characterized in that** the ambient air of the milk jets is carried away, and wherein the milk and the air are mixed in a mixing device (19, 34, 43, 49, 56) and the hot milk and milk foam are flowing into the collecting container (2).

4. The method according to one of claims 2 or 3, **characterized in that** another liquid, emulsion or suspension is used instead of milk (13).

5. A brewing system for preparing a mixed drink from two or more drink components, wherein the mixed drink is made in a collecting container (2) and at least two drink components are prepared by means of electromagnetic radiation, **characterized in that** the brewing system comprises:
a) a single collecting container (2) used for a direct collection of the drink components, and
b) at least two independent brewing units (1, 10, 67, 70) from which the actual drink components are pouring out during the brewing process, wherein the brewing units (1, 10, 67, 70) are arranged replaceable and are not simultaneously placeable on the collecting container (2).

6. The brewing system according to claim 5 for preparing a mixed drink from coffee or espresso (3) and hot milk with milk foam (15), **characterized in that** the brewing system comprises an independent brewing unit (1) for coffee or espresso, an independent brewing unit (10, 67, 70) for milk and milk foam and a single collecting container (2).

7. The brewing system according to claims 5 or 6 including one or more nozzles (18) in at least one of the brewing units (10, 67, 70), **characterized in that** a mixing device (19, 34, 43, 49, 56) is attached after the nozzles (18).

8. The brewing system according to any one of the claims 5 to 7, **characterized in that** at least one of the brewing units contains fine holes or fine cracks, which are formed by hollow spaces between one or more holes (65, 66, 69), which are bigger than the fine holes or cracks, and one or more elements (31, 57, 58, 59, 60), which are insert in the larger holes (65, 66, 69).

9. The brewing system according to any one of the claims 5 to 8, **characterized in that** a safety device is contained, which comprises of a hole (32, 48, 66, 69) arranged with an safety closure (27, 31, 38, 57, 58, 59) therein, wherein the hole (32, 48, 66, 69) connects the pressure-tight container (64) provided in the brewing unit (1, 10, 67, 70) with the collecting container (2), and wherein the safety closure (27, 31, 38, 57, 58, 59) is attached in the hole (32, 48, 66, 69) such that in case of a too high overpressure the safety closure (27, 31, 38, 57, 58, 59) comes off and releases the hole (32, 48, 66, 69).

## Revendications

1. Procédé de préparation d'une boisson mélangée à partir de deux ou plusieurs composants de boisson, dans lequel la boisson mélangée est faite dans un contenant collecteur (2), et au moins deux composants de boisson sont préparés au moyen de radiation électromagnétique, **caractérisé en ce que** les composants de boisson sont préparés dans des étapes successives, les unités de brassage (1, 10, 67, 70) pour les composants de boisson ne sont en aucun cas exposés de manière simultanée à une radiation électromagnétique, pour la préparation de chacun des composants de boisson, le même contenant collecteur (2) est toujours utilisé pour la récupération directe des composants de boisson, et dans lequel les composants de boisson déjà préparés restent dans le contenant collecteur (2) pendant la préparation des composants de boisson suivants.

2. Procédé selon la revendication 1, pour préparer une boisson mélangée de café ou d'expresso (3) et de lait chaud avec mousse de lait (15), **caractérisé en ce que** le café ou l'expresso (3) est préparé en premier dans un contenant collecteur (2) au moyen de radiation électromagnétique, et ce contenant collecteur (2) contenant le café ou l'expresso (3) est utilisé ensuite en tant que contenant collecteur (2), pour une préparation de lait chaud avec mousse de lait, au moyen de radiation électromagnétique, la préparation étant complétement indépendante d'un procédé de brassage de café.

3. Procédé selon la revendication 1 ou 2, dans lequel, pour préparer le lait chaud avec mousse de lait en tant que composant de boisson, le lait est chauffé dans un contenant de brassage (11, 68), au moyen de radiation électromagnétique, et dans lequel le lait est passé à travers une ou plusieurs buses (18), **caractérisé en ce que** l'air autour des jets de lait est entrainé, le lait et l'air se mélangeant dans un dispositif de mélange (19, 34, 43, 49, 56), et le lait chaud et la mousse de lait coulent dans le contenant collecteur (2).

4. Procédé selon l'une quelconque des revendications 2 ou 3, **caractérisé en ce qu'**un autre liquide, émulsion ou suspension est utilisé à la place du lait (13).

5. Système de brassage pour la préparation d'une boisson mélangée à partir de deux ou plusieurs composants de boisson, dans lequel la boisson mélangée est faite dans un contenant collecteur (2) et au moins deux composants de boisson sont préparés au moyen de radiation électromagnétique, **caractérisé en ce que** le système de brassage comprend :
a) un contenant collecteur unique (2), utilisé pour une récupération directe des composants de boisson, et
b) au moins deux unités de brassage indépendantes (1, 10, 67, 70) à partir desquels les composants de boisson respectifs s'écoulent pendant le procédé de brassage, dans lequel les unités de brassage (1, 10, 67, 70) sont agencées de manière à être remplacées et ne peuvent pas être placées simultanément sur le contenant collecteur (2).

6. Système de brassage selon la revendication 5 pour préparer une boisson mélangée de café ou d'expresso (3) et de lait chaud avec mousse de lait (15), **caractérisé en ce que** le système de brassage comprend une unité de brassage indépendante (1) pour le café ou l'expresso, une unité de brassage indépendante (10, 67, 70) pour le lait et la mousse de lait, et un contenant collecteur unique (2).

7. Système de brassage selon la revendication 5 ou 6, comprenant une ou plusieurs buses (18) dans au moins une des unités de brassage (10, 67, 70), **caractérisé en ce qu'**un dispositif de mélange (19, 34, 43, 49, 56) est disposé après les buses (18).

8. Système de brassage selon l'une quelconque des revendications 5 à 7, **caractérisé en ce qu'**au moins une des unités de brassage contient des petits trous ou des petites craquelures qui sont formé(e)s par des espaces vides entre un ou plusieurs trous (65, 66, 69), qui sont plus gros que les petits trous ou craquelures, et un ou plusieurs éléments (31, 57, 58, 59, 60), qui sont insérés dans les trous plus gros (65, 66, 69).

9. Système de brassage selon l'une quelconque des revendications 5 à 8, **caractérisé en ce qu'**un dispositif de sécurité est prévu, qui comprend un trou (32, 48, 66, 69) et une fermeture de sécurité (27, 31, 38, 57, 58, 59) agencée dans celui-ci, dans lequel le trou (32, 48, 66, 69) relie le contenant (64), étanche sous pression, fourni dans l'unité de brassage (1, 10, 67, 70), avec le contenant collecteur (2), et dans lequel la fermeture de sécurité (27, 31, 38, 57, 58, 59) est attachée dans le trou (32, 48, 66, 69) de sorte qu'en cas d'une surpression trop importante, la fermeture de sécurité (27, 31, 38, 57, 58, 59) sort et libère le trou (32, 48, 66, 69).
